(19) Europäisches Patentamt
European Patent Office
Office européen des brevets

(11) **EP 2 449 344 B1**

(12) **FASCICULE DE BREVET EUROPEEN**

(45) Date de publication et mention
de la délivrance du brevet:
**12.03.2014 Bulletin 2014/11**

(21) Numéro de dépôt: **10724403.0**

(22) Date de dépôt: **28.05.2010**

(51) Int Cl.:
*G01C 19/56* *(2012.01)*

(86) Numéro de dépôt international:
**PCT/EP2010/057450**

(87) Numéro de publication internationale:
**WO 2011/000644 (06.01.2011 Gazette 2011/01)**

(54) **GYROSCOPE MICRO-USINE A DETECTION DANS LE PLAN DE LA PLAQUE USINE.**

MIKROMECHANISCHER KREISEL MIT ERKENNUNG AUF DER EBENE DER BEARBEITETEN PLATTE

MICRO-MACHINED GYROSCOPE WITH DETECTION IN THE PLANE OF THE MACHINED PLATE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.06.2009 FR 0903189**

(43) Date de publication de la demande:
**09.05.2012 Bulletin 2012/19**

(60) Demande divisionnaire:
**13186419.1 / 2 679 952**

(73) Titulaire: **Thales**
**92200 Neuilly Sur Seine (FR)**

(72) Inventeur: **LEVERRIER, Bertrand**
**F-26120 Montelier (FR)**

(74) Mandataire: **Esselin, Sophie et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 1 515 118     FR-A- 2 846 740**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne les capteurs inertiels destinés à la mesure de vitesses angulaires, ou gyromètres, et plus précisément les gyromètres micro-usinés selon des technologies de gravure, dépôts, dopages, etc, semblables à celles qui sont utilisées dans le domaine des circuits intégrés électroniques. On connaît déjà de tels capteurs inertiels micro-usinés réalisés sur une plaque de silicium ou de quartz. La structure est plane dans le plan de la plaque de silicium ou de quartz dans laquelle elle est gravée.

Des structures à deux masses vibrantes couplées mécaniquement à la manière d'un diapason ont déjà été réalisées: la structure d'un gyromètre ainsi réalisé comprend typiquement deux ensembles mobiles coplanaires excités en vibration et reliés en diapason, c'est-à-dire que les deux ensembles sont reliés à une structure de couplage centrale qui transfère l'énergie de vibration du premier ensemble vers le deuxième ensemble et réciproquement. Les ensembles sont excités en vibration dans le plan de la plaque par une structure d'excitation électrique. Cette vibration dans le plan de la plaque s'exerce perpendiculairement à un axe dit axe sensible du gyromètre, perpendiculaire à la direction de cette vibration. Lorsque le gyromètre tourne avec une certaine vitesse angulaire autour de son axe sensible, la composition de la vibration forcée avec le vecteur de rotation angulaire engendre, par effet Coriolis, des forces qui mettent les ensembles mobiles en vibration naturelle perpendiculairement à la vibration d'excitation et à l'axe de rotation; l'amplitude de cette vibration naturelle est proportionnelle à la vitesse de rotation. La vibration naturelle est détectée par une structure de détection électrique. Les signaux électriques qui en résultent sont exploités pour en déduire une valeur de la vitesse angulaire autour de l'axe sensible.

Des demandes de brevet FR2846740 et FR2859527, on connaît des gyromètres dont l'axe sensible est l'axe Oz perpendiculaire au plan des masses mobiles. Le mouvement d'excitation des ensembles mobiles est engendré dans une direction Ox du plan alors qu'un mouvement résultant de la force de Coriolis est détecté dans une direction Oy du même plan, perpendiculaire à Ox.

De la demande de brevet FR2846740, on connaît un gyromètre du type présentant une architecture en diapason. Chaque ensemble mobile de ce gyromètre comprend un premier élément mobile inertiel relié à la structure de couplage et pouvant vibrer selon deux degrés de liberté dans des directions orthogonales Ox et Oy du plan de la plaque, et un deuxième élément mobile relié d'une part au premier élément mobile et d'autre part à des zones d'ancrage fixes, par des moyens de liaison qui permettent la transmission au deuxième élément du mouvement de vibration du premier élément selon la direction Oy, sans autoriser un mouvement du deuxième élément selon la direction Ox.

L'architecture en diapason présente un inconvénient : le mode de détection dans lequel les éléments mobiles d'un ensemble mobile vibrent suivant la direction Oy n'est pas dynamiquement équilibré. En effet, les deux éléments mobiles vibrent en phase dans la direction Oy. De ce fait, ce mode transmet un couple sur le support du diapason ce qui rend ce mode sensible aux conditions de fixation sur le support et aux perturbations extérieures transmises par le support.

Pour remédier à ce problème, on connaît une solution à double diapason décrite dans la demande de brevet FR2859527. Chaque ensemble mobile de ce gyromètre comprend trois éléments mobiles, un premier élément mobile inertiel relié à la structure de couplage et destiné à vibrer selon deux directions orthogonales Ox et Oy dans le plan de la plaque, un deuxième élément mobile destiné à vibrer selon Oy et relié au premier élément mobile et à des zones d'ancrage fixes par des moyens de liaison qui permettent la transmission au deuxième élément mobile du mouvement de vibration du premier élément mobile selon Oy sans autoriser un mouvement du deuxième élément selon la direction Ox, un troisième élément mobile destiné à vibrer selon Oy et relié au deuxième élément mobile et à des zones d'ancrage fixes par des seconds moyens de liaison qui permettent la transmission en opposition de phase au troisième élément mobile du mouvement de vibration du deuxième élément mobile selon Oy.

On obtient ainsi un gyromètre à double diapason présentant un mouvement de détection équilibré au sein de chacun des ensembles mobiles du fait que le mouvement du troisième élément mobile contrebalance le mouvement des premier et second éléments mobiles. On mesure une vitesse de rotation avec une très bonne sensibilité, comme avec le simple diapason, et des perturbations minimes dues au mouvement d'excitation.

Toutefois le gyromètre à double diapason de l'art antérieur présente l'inconvénient, du fait de l'ajout d'un élément mobile supplémentaire dans chaque ensemble mobile, d'être de taille plus grande et donc plus coûteux et plus complexe à réaliser qu'un simple diapason.

Cet inconvénient est amplifié par le fait que l'ajout du troisième élément mobile ajoute des modes de vibration parasites dont les fréquences, à cause des défauts de gravure, sont beaucoup plus difficiles à maîtriser qu'avec le simple diapason.

Le but de l'invention est de proposer un gyromètre qui puisse être dynamiquement équilibré, contrairement au simple diapason de l'art antérieur et dans lequel on remédie aux inconvénients liés au gyromètre en double diapason de l'art antérieur.

A cet effet l'invention a pour objet un gyromètre à structure vibrante selon l'une quelconque des revendications 1 à 9.

On obtient un gyromètre, présentant un mouvement de détection équilibré au sein de chacun des deux ensembles mobiles du fait que le mouvement du deuxième élément mobile contrebalance le mouvement du premier élément mobile.

Le gyromètre selon l'invention, du fait de la présence d'uniquement deux éléments mobiles par ensemble mobile, est moins coûteux et moins difficile à équilibrer qu'un double diapason.

Dans le gyromètre selon l'invention, les rapports d'amplitude de vibrations sont uniquement fixés par les dimensions du levier, les défauts de réalisation éventuels (gravure, ...) pouvant changer les valeurs des masses en mouvement ou les longueurs du levier ne sont alors pas compensées.

Par contre, le faible nombre de modes de vibration facilite encore le dimensionnement du diapason pour la séparation en fréquence des modes de vibration utiles et inutiles. On obtient ainsi des mesures de vitesse précises.

D'autres caractéristiques et avantages de l'invention apparaîtront à la lecture de la description détaillée qui suit et qui est faite à titre d'exemple non limitatif en référence aux dessins annexés dans lesquels:

- la figure 1a représente schématiquement en vue de dessus la structure générale du gyromètre micro-usiné selon un exemple, la figure 1 b représente un agrandissement du premier ensemble mobile du gyromètre selon ledit exemple,
- les figures 2a, 2b et 2c représentent schématiquement des exemples d'éléments de liaison pour l'exemple représenté sur les figures 1a et 1 b,
- la figure 3a représente schématiquement en vue de dessus la structure générale du gyromètre micro-usiné selon un mode de réalisation de l'invention, la figure 3b représente un agrandissement du premier ensemble mobile du gyromètre selon un mode de réalisation de l'invention,
- la figure 4 représente schématiquement un agrandissement de la figure 3b.

D'une figure à l'autre, les mêmes éléments sont repérés par les mêmes références.

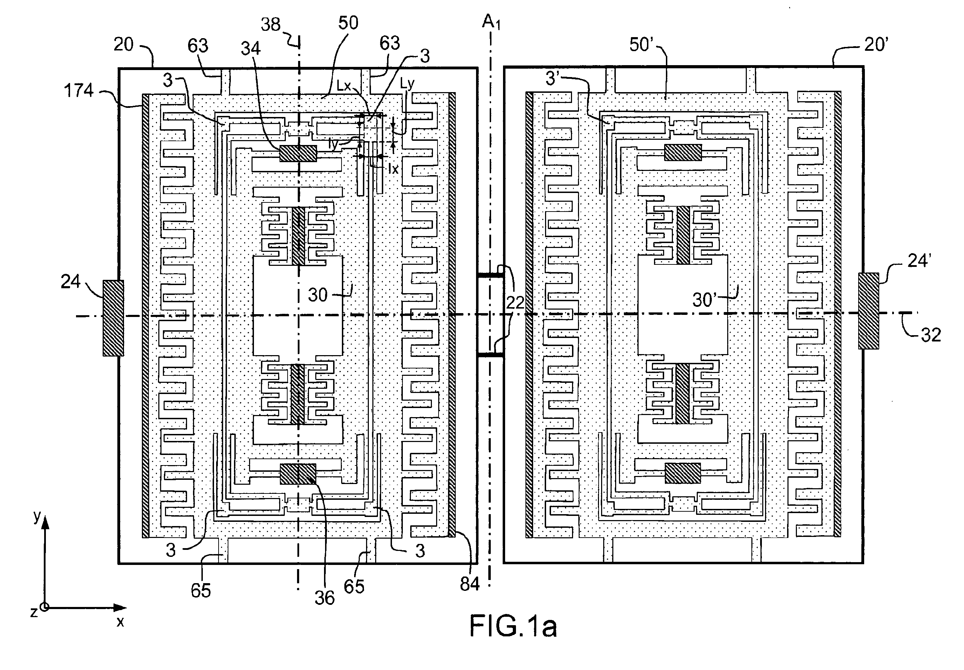

La figure 1a représente la plaque mince plane de silicium usinée selon un exemple pour faire un gyromètre dont l'axe sensible est perpendiculaire au plan de la plaque (qui est le plan de la figure).

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P). Le silicium conducteur permet de réaliser les fonctions électriques du gyromètre et notamment les fonctions d'excitation et les fonctions de détection; ces fonctions sont réalisées par des peignes capacitifs interdigités alimentés en courant ou en tension électrique; les dents de ces peignes, directement usinées dans le silicium conducteur, servent d'armatures de condensateurs utiles aux fonctions d'excitation et aux fonctions de détection. L'épaisseur de la plaque de silicium d'origine est par exemple de quelques centaines de micromètres; la plaque comporte d'une part des zones d'ancrage fixes formées dans cette épaisseur et d'autre part la structure vibrante proprement dite, libre par rapport aux zones d'ancrage et formée sur une épaisseur plus faible, par exemple sur une épaisseur d'une soixantaine de micromètres, isolée du reste de l'épaisseur de la plaque par un intervalle étroit. Sur cette épaisseur d'une soixantaine de micromètres, la plaque de silicium est découpée par micro-usinage selon les motifs de masse mobile, cadre mobile, structure de couplage, bras de flexion, et peignes interdigités désirés.

L'usinage de la structure peut être réalisé en utilisant comme substrat d'origine un substrat de silicium sur isolant, mais d'autres méthodes sont également possibles. Un substrat en silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'usinage consiste à attaquer le silicium de la couche supérieure par sa face avant, selon les motifs de surface désirés, au moyen de techniques de photogravure en usage en microélectronique, jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde est ensuite enlevée par attaque sélective avec un autre produit de manière à ne conserver que la couche superficielle de silicium monocristallin, sauf à l'endroit des zones d'ancrage où la couche d'oxyde subsiste et forme une liaison solidaire entre le substrat et la couche superficielle de silicium monocristallin. L'usinage par la face avant définit les différents découpages des parties mobiles. Ce sont donc ces motifs de surface, zones d'ancrage et découpages des parties mobiles, que l'on voit sur les figures. La structure générale du gyromètre est une structure symétrique comportant deux ensembles inertiels mobiles vibrant en opposition de phase, ces ensembles mobiles étant reliés entre eux par une structure de couplage servant à transmettre sans pertes, d'un ensemble à l'autre, les énergies mécaniques de vibration des deux ensembles pour mettre en opposition de phase ces vibrations. La symétrie de la structure est une symétrie par rapport à un axe A1, avec un ensemble mobile de chaque côté de cet axe. La structure de couplage est constituée, de préférence, par deux cadres extérieurs rectangulaires 20 et 20' à l'intérieur desquels sont situés les ensembles inertiels mobiles à savoir un premier ensemble mobile et respectivement un deuxième ensemble mobile. Les cadres 20 et 20' sont reliés entre eux par une double courte barre de liaison 22 pouvant être considérée comme rigide. La double barre de liaison 22 relie le côté du premier cadre au côté adjacent du deuxième cadre. Elle est perpendiculaire à l'axe A1 et centrée sur cet axe. La double barre de liaison courte 22 peut être simple ou renforcée par une autre barre de liaison courte située au milieu de la double barre 22 et également centrée sur l'axe A1. L'écartement plus ou moins grand de chacune des barres constituant la double barre 22, permet un certain ajustement de l'écart entre les fréquences utiles d'excitation et de détection du microgyromètre.

Les cadres extérieurs 20 et 20' de la structure de couplage entourent les deux ensembles mobiles en principe par au moins trois côtés et ils sont reliés à ces deux ensembles de préférence le long de côtés perpendiculaires à l'axe de symétrie générale A1. Les cadres 20 et 20' peuvent (facultativement) être fixés chacun à une zone d'ancrage 24, 24' située au milieu d'un côté opposé au côté relié à la barre de liaison 22. Dans ce cas, les cadres 20 et 20' entourent complètement chacun un ensemble mobile inertiel respectif. La barre de liaison centrale 22 et les autres côtés des cadres 20 et 20' ne sont pas reliés à des zones d'ancrage fixes.

Les peignes interdigités servant à la mise en vibration des ensembles inertiels et à la détection du mouvement résultant de la force de Coriolis sont disposés eux aussi à l'intérieur de chacun des cadres extérieurs 20 et 20'. Dans ce qui suit on va décrire seulement les éléments situés à l'intérieur du cadre 20, la structure étant rigoureusement identique pour l'autre cadre 20' ; les éléments intérieurs au cadre 20' (deuxième ensemble mobile) sont désignés par les mêmes références que celles du cadre 20 mais affectés du signe 'prime'.

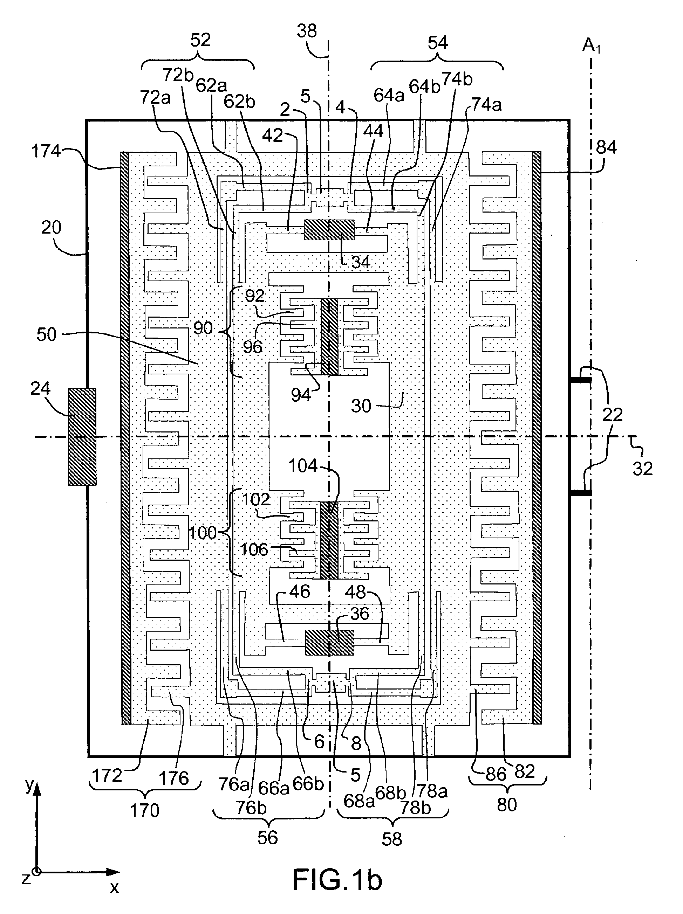

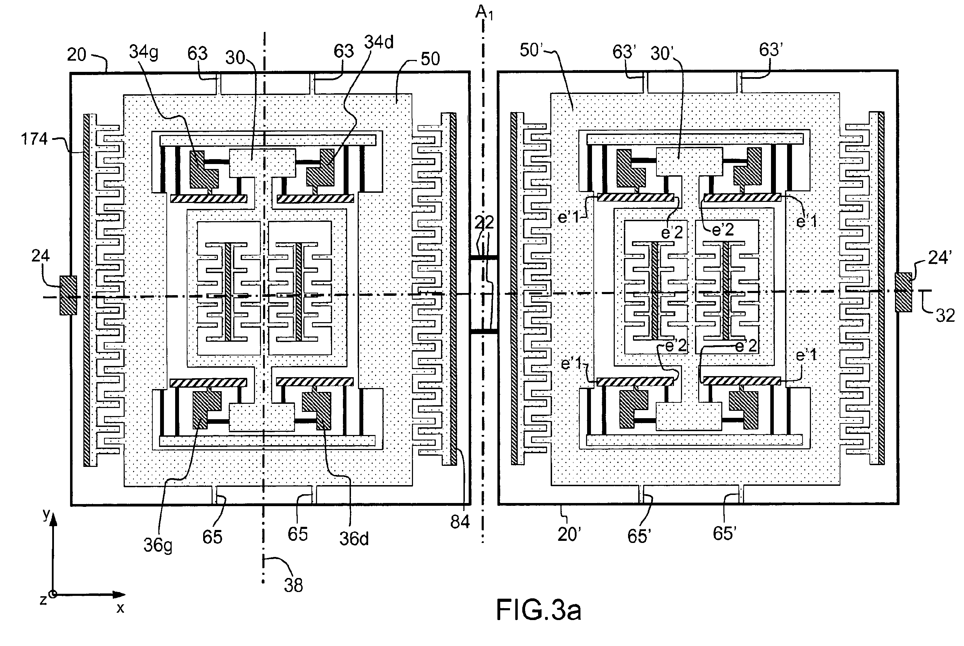

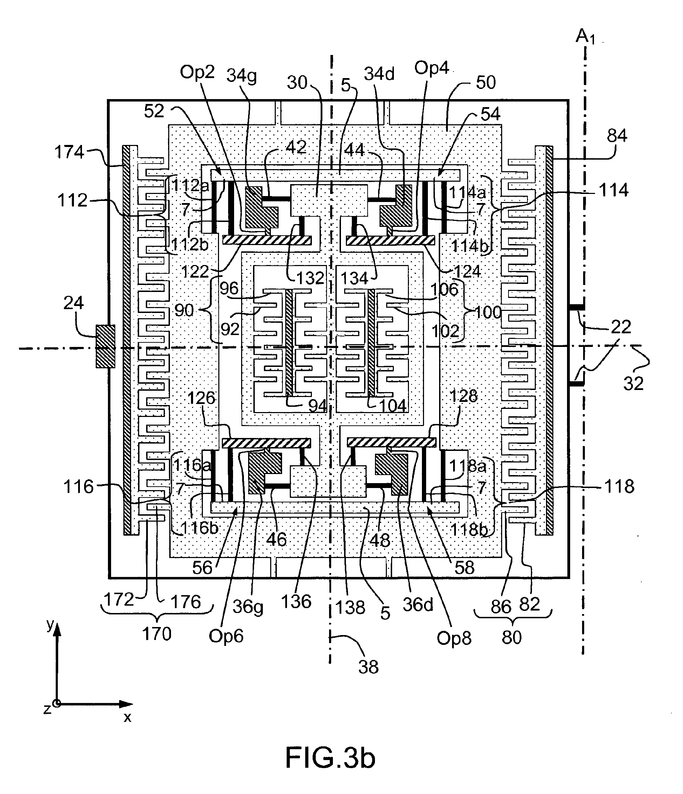

Pour plus de clarté, tous les éléments ne sont pas référencés sur la figure 1 a. La figure 1 b représente un agrandissement de la figure 1 a sur laquelle on a représenté les éléments présents à l'intérieur du cadre 20 à savoir du premier ensemble mobile. Notons d'ores et déjà qu'il en est de même pour la figure 3a sur laquelle tous les éléments ne sont pas référencés. La figure 3b représente un agrandissement de la figure 3a sur laquelle on a représenté les éléments présents à l'intérieur du cadre 20 à savoir du premier ensemble mobile.

Chaque ensemble inertiel comporte un premier élément mobile appelé cadre inertiel intermédiaire 50 qui entoure un deuxième élément mobile, désigné par masse de détection 30. Le cadre inertiel intermédiaire 50 est situé entre le deuxième élément mobile 30 et le cadre extérieur 20.

La masse de détection 30 ne peut se déplacer que selon une direction Oy (axe vertical dans le plan de la figure) ; le cadre inertiel intermédiaire 50 peut se déplacer selon l'axe Oy et selon un axe Ox perpendiculaire à Oy et également situé dans le plan de la figure. En effet, comme nous le verrons par la suite, la masse de détection 30 est reliée à des zones d'ancrage fixes au moyen de moyens de liaison de la masse aux zones d'ancrage qui interdisent le mouvement de la masse dans la direction ox. L'axe sensible du gyromètre est un axe Oz perpendiculaire au plan de la plaque. On excite une vibration du cadre inertiel intermédiaire 50 dans la direction Ox; lorsque le gyromètre tourne autour de son axe sensible Oz, une vibration du cadre inertiel intermédiaire 50 est engendrée selon l'axe Oy. Cette vibration selon Oy est transmise au cadre interne 30 en opposition de phase avec celle du premier élément mobile 50, alors que la vibration selon Ox n'est pas transmise. L'amplitude de la vibration du deuxième élément mobile 30 est proportionnelle au mouvement de vibration du cadre intermédiaire 50 dans la direction Oy. Le mouvement de détection est ainsi équilibré au sein de chacun des deux ensembles mobiles du fait que le mouvement de la masse de détection 30 contrebalance le mouvement du cadre intermédiaire 50.

Comme on le verra par la suite, une structure d'excitation de la vibration est associée au cadre intermédiaire 50 et une structure de détection de vibration est associée à la masse de détection 30. La structure de couplage, constituée par les cadres 20, 20' et la barre 22 qui les relie, transmet l'énergie mécanique de vibration de l'ensemble inertiel mobile d'un côté à l'autre de l'axe A1 aussi bien pour les vibrations selon Ox que les vibrations selon Oy car cette structure de couplage est reliée directement aux premiers éléments mobiles qui peuvent vibrer à la fois selon Ox et selon Oy.

Le cadre intermédiaire 50 entoure de préférence complètement la masse 30. De préférence, il a une forme globalement rectangulaire tout comme la masse 30 et le cadre extérieur 20. Le cadre intermédiaire externe 50, entouré par le cadre extérieur 20 de la structure de couplage, est relié à ce cadre extérieur par des bras de liaison courts 63 d'un côté, 65 de l'autre, les bras 63 étant symétriques des bras 65 par rapport à l'axe de symétrie 32. Les bras 63, de même que les bras 65, sont répartis le long d'un côté du cadre 50, ce côté étant parallèle à l'axe Ox. Ces bras courts constituent des liaisons pratiquement rigides à travers lesquelles l'énergie de vibration selon Ox et Oy du cadre intermédiaire 50 peut passer vers la structure de couplage et donc vers les cadres 50'. Dans les exemples représentés, deux bras courts 63 sont répartis le long du côté du cadre intermédiaire externe 50; deux autres bras courts 65 sont répartis le long du côté opposé. Il n'y a pas de bras de liaison entre le cadre intermédiaire et le cadre extérieur de couplage le long des côtés parallèles à l'axe Oy.

Dans l'exemple représenté sur les figures 1a et 1b et dans le mode de réalisation représenté sur les figures 3a et 3b, la masse de détection 30 est reliée à des zones d'ancrage fixes par des moyens de liaison de la masse aux zones d'ancrage comprenant au moins deux bras de flexion de liaison aux zones d'ancrage conçus pour autoriser un déplacement de la masse de détection 30 selon Oy mais pour empêcher tout mouvement significatif de la masse dans la direction Ox. Ces bras sont de préférence situés de part et d'autre d'un axe de symétrie 32 de la masse, parallèle à Ox. Dans l'exemple représenté sur la figure 1 b, il y a deux zones d'ancrage 34 et 36 situées de part et d'autre de la masse de détection, symétriques par rapport à cet axe de symétrie 32. De plus, ces zones sont de préférence situées sur un autre axe de symétrie 38 de la masse, axe qui est parallèle à Oy. Les bras de flexion de liaison aux zones d'an-

crage qui relie la masse 30 aux zones d'ancrage sont des bras allongés dans la direction Ox, de manière à présenter une grande raideur (grande résistance à l'allongement) dans cette direction. Cette grande raideur n'autorise pas le mouvement du deuxième élément mobile dans la direction Ox. Ils sont par ailleurs très étroits, comparativement à leur longueur, pour présenter une faible raideur dans la direction Oy perpendiculaire à Ox; cette faible raideur autorise un déplacement de la masse selon Oy. Dans l'exemple représenté sur les figures 1a et 1b, il y a de préférence quatre bras de flexion de liaison aux zones d'ancrage plutôt que deux, la masse étant reliée à la zone d'ancrage 34 par deux bras 42 et 44 de part et d'autre de la zone 34; la masse est reliée par ailleurs à la deuxième zone d'ancrage 36 par deux bras 46 et 48 de part et d'autre de la zone 36.

Pour maximiser la flexibilité des bras de flexion de liaison aux zones d'ancrage dans la direction Oy en augmentant le rapport entre la longueur et la largeur de ces bras, on relie chaque bras d'un côté à proximité d'un coin d'extrémité de la masse (la masse a une forme en principe généralement rectangulaire mais elle peut être découpée autour de la zone d'ancrage dans la direction Oy sans réduire significativement la dimension de la masse dans cette direction) et de l'autre à la zone d'ancrage située sur l'axe de symétrie 38.

Dans le mode de réalisation représenté sur les figures 3a et 3b; la première zone d'ancrage comprend une première zone d'ancrage droite 34d et une première zone d'ancrage gauche 34g. La deuxième zone d'ancrage comprend une deuxième zone d'ancrage droite 36d et une deuxième zone d'ancrage gauche 36g. Les zones d'ancrage gauche et droite sont situées de part et d'autre de l'axe 38 qui est parallèle à Oy. De préférence, la première 34g, respectivement la deuxième 36g zone d'ancrage gauche est symétrique à la première 34d, respectivement la deuxième 36d, zone d'ancrage droite par rapport à l'autre axe 38. Il y a alors quatre bras de flexion de liaison aux zones d'ancrage, la masse étant reliée aux premières zones d'ancrage 34g, 34d respectives par deux premiers bras respectifs gauche 42 et droite 44 (représentés sur la figure 3b) et aux deuxièmes zones d'ancrage 36g, 36d respectives par deux deuxièmes bras respectifs gauche 46 et droits 48. Les bras gauches et droits étant disposés de part et d'autre de l'axe 32 parallèle à Oy. Dans cette variante, la masse 30 est découpée autour des zones d'ancrage et présente entre les deux premières zones d'ancrage et également entre les deux secondes zones d'ancrage, la forme d'un T dont le pied s'étend sur l'axe 38 et la barre parallèlement à l'axe 32. La masse présente, par exemple, une forme symétrique par rapport à l'axe 32 et à l'axe 38.

La masse 30 est reliée au cadre intermédiaire 50 par des moyens de liaison qui permettent la transmission, en opposition de phase, au deuxième élément mobile, du mouvement de vibration du premier élément mobile selon la direction Oy.

Les moyens de liaison comprennent au moins deux ensembles de liaison. Il y a de préférence quatre ensembles de liaison entre la masse 30 et le cadre intermédiaire 50, les ensembles de liaison étant situés en pratique chacun à un coin de la masse mobile. Ils sont disposés symétriquement d'une part par rapport à l'axe de symétrie 32 de la masse (axe parallèle à Ox) et d'autre part par rapport à l'axe de symétrie 38 (parallèle à Oy). Ces ensembles sont désignés sur les figures 1 b et 3b, par les références 52, 54, 56,58.

Un ensemble de liaison comprend au moins un élément de liaison s'étendant entre une première extrémité et un deuxième extrémité comprenant un premier bras de liaison (ou de flexion) étroit et allongé dans la direction Oy ainsi qu'un moyen pour transmettre, en opposition de phase, un mouvement dans la direction Oy du premier élément mobile vers le deuxième élément mobile.

Les premiers bras de liaison (portant les références numériques 72a, 72b, 74a, 74b, 76a, 76b, 78a, 78b sur la figure 1 b et 112, 114, 116, 118 sur la figure 3b) présentent une grande raideur (c'est à dire une grande résistance à l'allongement) dans la direction Oy et une faible raideur dans la direction Ox. Ils sont aptes à véhiculer un mouvement du premier élément mobile selon Oy au deuxième élément mobile. Du fait de leur flexibilité dans la direction Ox, ils permettent d'éviter les déformations des éléments mobiles 50, 30 provenant du mouvement du cadre 50 selon Ox et permettent surtout un mouvement de grande amplitude suivant Ox de 50. Les premiers bras sont allongés dans la direction Oy et ont une largeur faible (dans la direction Ox) devant leur longueur, afin de présenter cette différence de raideurs. Les premiers bras de flexion s'étendent chacun entre une première et une deuxième extrémité.

Les premiers bras de flexion peuvent soit s'étendre dans leur totalité dans la direction dans laquelle ils présentent la plus grande raideur (direction Oy), comme visible sur la figure 1 b, soit être des bras repliés en U (comme visible sur la figure 3b) comprenant chacun deux branches 112a, 112b; 114a, 114b; 116a, 116b; 118a, 118b reliées l'une à l'autre par l'intermédiaire d'une de leurs extrémités, au moyen d'un élément court de liaison 7 pour chaque bras. Les extrémités libres des deux branches constituent la première et la deuxième extrémité du premier bras. Le bras s'étend entre ces deux extrémités. D'une manière générale, la forme repliée d'un bras permet de diviser par deux ses dimensions longitudinales sans réduire significativement sa longueur utile donc sans diminuer significativement le rapport élevé entre sa raideur importante et sa faible raideur. La forme repliée des bras permet surtout d'éviter d'avoir des déformations non linéaires des bras en ayant une extrémité mobile suivant Oy.

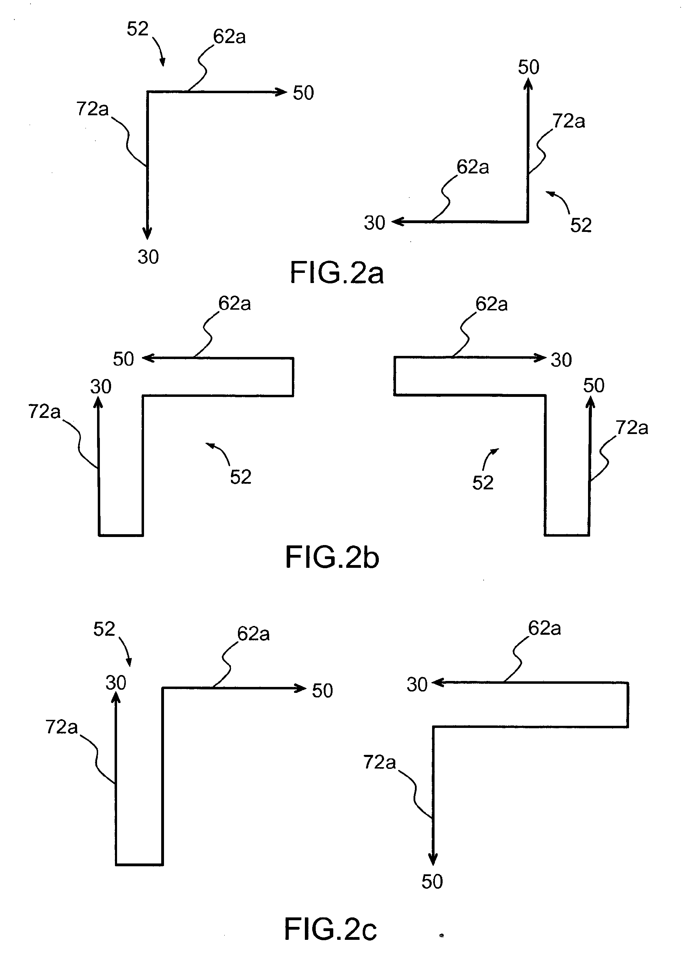

Il est possible, comme représenté sur les figures 1 et 2, de relier deux ensembles de liaison disposés de part et d'autre de l'axe 38 (ou de l'axe 32) par un élément rigide 5 de manière à renforcer la symétrie du déplacement suivant la direction Oy des premier 50 et deuxième 30 éléments mobiles. Sur le mode de réalisation représenté sur la figure 2, les éléments courts de liaison 7 font partie intégrante d'une barre 5 s'étendant entre deux ensembles de liaison disposés de part et d'autre de l'axe 38.

Chaque élément de liaison comprend en outre, un moyen ( présentant les références numériques 62a, 62b, 64a, 64b, 66a, 66b, 68a, 68b sur la figure 1 b et 122, 124, 126, 128 sur la figure 3b) pour transmettre, en opposition de phase, un mouvement dans la direction Oy du premier élément mobile 50 au deuxième élément mobile 30. Ces moyens s'étendent également entre une première extrémité et une deuxième extrémité. Dans un élément de liaison, le moyen pour transmettre en opposition de phase est relié au premier bras. Plus particulièrement, les premières extrémités du premier bras et du moyen pour transmettre un mouvement en opposition de phase sont reliées l'une à l'autre, leurs deuxièmes extrémité formant respectivement la première et la deuxième extrémité de l'élément de liaison. Le premier bras est apte à transmettre un mouvement selon Oy du premier élément mobile 50 aux moyens pour transmettre en opposition de phase qui sont aptes à transmettre ce mouvement selon Oy, en opposition de phase, au deuxième élément mobile 30.

Dans la suite du texte, par reliés on entend que deux éléments adjacents sont joints directement ou indirectement. On dit qu'un premier et un deuxième élément sont joints directement lorsque le premier élément s'étend jusqu'au deuxième élément et inversement. Deux éléments sont dits liés indirectement lorsqu'ils sont séparés par un troisième élément. Ces éléments ne sont pas séparés par un troisième élément. Par exemple, un bras relié directement au deuxième élément mobile est obtenu par une découpe dans le deuxième élément mobile.

Dans l'exemple représenté sur la figure 1 b, chaque ensemble de liaison comprend deux éléments de liaison. Par ailleurs, les moyens pour transmettre, en opposition de phase, un mouvement dans la direction Oy du premier élément mobile 50 au deuxième élément mobile 30 sont des bras de flexion, appelés deuxièmes bras de flexion 62a, 62b, 64a, 64b, 66a, 66b, 68a, 68b, allongés présentant une grande résistance à l'allongement dans la direction Ox et une faible raideur dans la direction Oy. Ces bras ont, comme les premiers bras, une fonction de ressort.

Les deuxièmes bras et les premiers bras s'allongeant dans deux directions perpendiculaires, ils forment des éléments de liaison en forme de L 62a avec 72a, 64a avec 74a ainsi de suite. Un élément de liaison en L comprend deux branches dont une formée par le premier bras et l'autre est formée par le deuxième bras. Par ailleurs, les premiers et deuxièmes bras de flexion s'étendent tous dans leur totalité dans la direction dans laquelle ils présentent une grande résistance à l'allongement (direction Oy pour les premiers bras, direction Ox pour les deuxièmes bras.) Les ensembles de liaison sont reliés d'une part au premier élément mobile et d'autre part au deuxième élément mobile. Ils comprennent chacun deux éléments de liaison en forme de L reliés entre eux par l'intermédiaire d'un élément court de liaison 2, 4, 6, 8. Par exemple le premier ensemble de liaison comprend deux ensembles de liaison 62a, 72a et 62b, 72b reliés entre eux par l'intermédiaire d'un élément court de liaison 2. Ainsi on obtient un double L formé de deux L parallèles, dont un extérieur (proche du premier élément mobile, par exemple l'élément 62a, 72a) et un L intérieur (proche du deuxième élément mobile, 62b, 72b) Plus précisément, les premières extrémités des éléments de liaison adjacents sont reliées par un élément court de liaison s'étendant dans la direction perpendiculaire à la direction de raideur la plus importante des bras formant lesdites premières extrémités et les deuxièmes extrémités sont reliées respectivement au premier et au deuxième élément mobile. Par exemple, sur la figure 1b, les deuxièmes bras de deux L formant un ensemble de liaison sont reliés entre eux à par l'intermédiaire de leur extrémité libre par un élément de liaison court 2, 4, 6, 8 s'étendant dans la direction Oy et le premier bras du L extérieur, respectivement le deuxième bras du L intérieur, est relié au premier élément mobile, respectivement au deuxième élément mobile. De préférence, les éléments de liaison sont reliés directement aux éléments mobiles.

En formant un double L, on double en quelque sorte les premiers et deuxièmes bras d'un ensemble de liaison. Cela permet d'absorber les déformations des bras dans la direction perpendiculaire à la direction selon laquelle ils s'étendent. On maitrise ainsi de façon précise le mouvement du second élément par rapport à celui du premier élément mobile.

Le L intérieur étant plus petit que le L extérieur, avantageusement, les deux barres (ie le premier et le deuxième bras) du L intérieur sont reliées directement l'une à l'autre. Les deux barres (ie. le premier et le deuxième bras) du L extérieur sont reliées, de préférence, par l'intermédiaire d'un élément rigide 3. L'élément rigide 3 présente une longueur Lx suivant la direction Ox et une longueur Ly suivant la direction Oy, égales à la différence de longueur suivant la direction Ox, respectivement Oy entre le L intérieur et le L extérieur.

L'élément est rigide est dit massif lorsqu'il présente une largeur lx suivant la direction Ox et une largeur ly suivant la direction Oy supérieures à la largeur du premier bras dans la direction Ox et respectivement à celle du deuxième bras dans la direction Oy. De cette manière, l'élément 3 est rigide suivant Ox et Oy. On dit dans ce cas que l'élément est massif. On facilite ainsi le dimensionnement du gyromètre pour éloigner, les unes des autres, les fréquences des différents modes de vibration (c'est-à-dire séparer les modes utiles et inutiles) car tous les bras des ensembles de liaison présentent la même longueur. Sur la figure 1 a, la longueur Lx (respectivement Ly) est égale à la largeur lx (respectivement ly).

Dans l'exemple représenté sur la figure 1 a, l'élément rigide est un élément carré. De préférence, la taille de l'élément rigide est aussi petite que possible de sorte à perdre le moins de place possible. En variante, les deux barres du L extérieur sont reliées directement l'une à l'autre. Les barres extérieures du L ont alors une longueur supérieure à celles du L inférieur.

En variante, un ensemble de liaison comprend uniquement un élément de liaison en forme de L relié d'une part (par l'intermédiaire d'une première extrémité) au premier élément mobile et d'autre part (par l'intermédiaire de la deuxième extrémité) au deuxième élément mobile. Sur les figures 2a, 2b et 2c, on a représenté schématiquement ces variantes de l'élément de liaison 52 dans lesquelles les références numériques désignant les éléments mobiles auxquels il est relié sont indiquées au bout des flèches représentant les premier et deuxième bras. Les premier et deuxième bras peuvent s'étendre tous les deux dans leur totalité dans la direction dans laquelle ils présentent une grande résistance à l'allongement (figure 2a). En variante, un des deux bras (figure 2c) ou les deux bras (figure 2c) peuvent être des bras repliés en U (une branche du U étant reliée au bras adjacent et l'autre branche du U est reliée à un des éléments mobiles 30, 50.) Dans le cas où les deux bras sont repliés, on retrouve une configuration en double L différente de la configuration en double L décrite précédemment dans le sens où le premier élément mobile est relié à l'élément de liaison par l'intermédiaire du premier (ou deuxième bras) alors que le deuxième élément mobile est reliée à l'élément de liaison par l'intermédiaire de l'autre type de bras, à savoir le deuxième bras (ou le premier bras). Cette configuration donne d'autres possibilités d'agencement dans la forme des éléments mobiles 50 et 30. De préférence, le L est relié directement aux deux éléments mobiles, les bras formant le L sont alors obtenus par découpes respectives dans les deux éléments mobiles. Dans ces variantes les formes des deux éléments mobiles sont adaptées pour établir les liaisons visibles sur les figures 2a, 2b et 2c.

Le gyromètre selon l'exemple représenté sur les figures 1a et 1b dans le plan parmi lesquels figurent les modes utiles d'excitation et de détection en diapason, les quatre autres modes étant des modes parasites. Dans le mode utile d'excitation, seuls les premiers éléments mobiles vibrent suivant l'axe Ox et les deuxièmes éléments mobiles sont immobiles. Dans le mode de détection, le mouvement suivant l'axe Oy des premiers éléments mobiles entraine les deuxièmes éléments en opposition de phase avec eux. Les moyens de liaison caractérisés par des coefficients de raideur, permettent de séparer les modes utiles des autres modes parasites. Le gyromètre est dimensionné de préférence de telle sorte que la condition suivante soit respectée:

$$K_{42,44,46,48}/M_{30} = 2\ K_{20}/M_{50}$$

$K_{42,44,46,48}$ étant le coefficient de raideur des bras de flexion 42, 44, 46, 48 reliant la masse 30 aux zones d'ancrage.

$K_{20}$ le coefficient de raideur selon Oy du cadre extérieur 20.

$M_{50}$ et $M_{30}$ les masses respectives des premier 50 et deuxième 30 éléments mobiles.

Lorsque cette condition est respectée, le mode diapason est dynamiquement équilibré, c'est-à-dire que la résultante des efforts transmis sur le support est nul et l'amplitude $Y_{30}$ du mouvement de détection du deuxième élément mobile 30 selon Oy est telle que:

$$Y_{30}/Y_{50} = M_{50}/M_{30}$$

$Y_{50}$ étant l'amplitude du mouvement du premier élément mobile 50 selon Oy.

En choisissant $M_{30} < M_{50}$, l'amplitude selon Oy du mouvement de détection $Y_{30}$ est donc supérieure à celle du premier élément mobile 50. On peut donc de cette manière augmenter la sensibilité du gyromètre dans le rapport $M_{50}/M_{30}$.

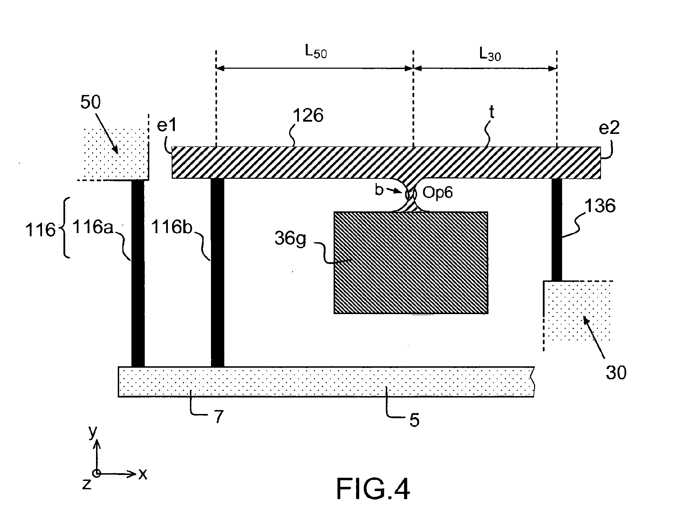

Sur les figures 3a et 3b, on a représenté un mode de réalisation du gyromètre selon l'invention. Les éléments communs à l'exemple représenté sur les figures 1 a et 1 b et au mode de réalisation représenté sur les figures 3a et 3b présentent les mêmes numérotations. On va maintenant décrire ce qui diffère dans le mode de réalisation représenté sur les figures 3a et 3b par rapport à l'exemple représenté sur les figures 1a et 1b. Le moyen pour transmettre un mouvement dans la direction Oy, en opposition de phase, du premier 50 au deuxième 30 élément mobile de chaque élément de liaison est un levier 122, 124, 126, 128 relié d'une part à un premier bras 112, 114, 116, 118 et d'autre part à un élément mobile 30 ou 50. Les ensembles de liaison comprennent chacun un unique élément de liaison qui est relié d'une part au premier élément mobile et d'autre part au deuxième élément mobile. Dans l'exemple représenté sur la figure 3b, le levier est relié, d'une part au deuxième élément mobile 30 par l'intermédiaire d'un bras 132, 134, 136, 138 présentant une grande rigidité dans la direction Oy et d'autre part, directement au premier bras 112, 114, 116, 118 et le premier bras est relié directement premier élément mobile 50. En variante, le levier est relié directement à un élément mobile et au premier bras. Chaque levier est en liaison pivot avec une zone d'ancrage 34g, 34d, 36g, 36d autour d'axes pivot respectifs Op2, Op4, Op6, Op8 s'étendant dans la direction Oz et situés respectivement entre le premier bras 112, 114, 116, 118 et l'élément mobile (ici 30) auquel est relié le levier. Autrement dit chaque axe Op est situé entre les deux extrémités e1, e2 d'un levier. Les axes des pivots Op2, Op4, Op6, Op8 sont fixes par rapport aux zones d'ancrage. Pour plus de clarté on n'a référencé, sur la figure 3a, les extrémités des levier que sur le deuxième ensemble mobile. On les a également référencées sur la figure 4 qui sera décrite ultérieurement.

Lorsque le premier élément mobile 50 se déplace vers le bas dans la direction Oy, le premier bras 112, 114, 116, 118 tire la première extrémité e1 du levier correspondant dans la direction Oy, ce qui entraîne le pivotement du levier correspondant autour de l'axe du pivot correspondant, à savoir respectivement Op2, Op4, Op6, Op8. La deuxième extrémité e2 des leviers se dirigent alors vers le haut dans la direction Oy, entrainant avec eux le premier élément mobile 30. Le mouvement selon Oy du premier élément mobile 50 est ainsi transmis dans le sens inverse au deuxième élément mobile 30.

De préférence, lorsque le premier 50 et le deuxième 30 éléments oscillent relativement l'un à l'autre dans la direction Oy, chaque levier pivote autour d'une position de repos dans laquelle il s'étend dans sa position de repos. La position de repos du levier est la position dans laquelle il s'étend lorsque les deux éléments mobiles occupent leurs positions de repos respectives dans la direction Oy. Chaque levier s'étend de préférence sensiblement dans la direction Ox lorsqu'il est dans sa position de repos. On appelle position de repos d'un élément mobile selon la direction Oy, la position autour de laquelle il oscille dans la direction Oy. De cette manière, un levier en liaison pivot autour d'un axe parallèle à la direction Oz présente une très grande raideur dans la direction Ox par rapport à la direction Oy.

De préférence, les leviers sont rigides dans la direction dans laquelle ils s'étendent. De cette manière la rigidité dans la direction Ox est améliorée. Dans ce mode de réalisation, les leviers rigides en liaison pivot avec les zones d'ancrage autour d'un axe parallèle à la direction Oz et reliés à la masse 30 assurent la fonction de moyen de liaison de la masse 30 aux zones d'ancrage. En effet, la liaison pivot empêche la transmission d'un mouvement de translation du premier élément mobile 50 au deuxième élément mobile 30 dans la direction Ox. En effet, la liaison pivot empêche le mouvement de la masse 30 dans la direction ox.

Dans ce mode de réalisation, les moyens de liaison de la masse 30 aux zones d'ancrage sont communs avec les moyens de liaison de la masse 30 au premier élément 50.

Dans ce mode de réalisation, les ensembles sont, par exemple, dépourvus de bras de flexion de liaison aux zones d'ancrage 42, 44, 46, 48.

Sur la figure 4, on a représenté un agrandissement de la liaison réalisée entre une zone d'ancrage 36g et un levier 126 qui est similaire à la liaison réalisée entre chaque levier et une zone d'ancrage. Le levier est fixé de façon rigide en translation et souple en rotation autour de l'axe Op6 à une zone d'ancrage. Le levier comprend une tige rigide t s'étendant entre la première et la deuxième extrémité du levier et une branche b, s'étendant, dans la direction perpendiculaire à la tige rigide, entre la tige rigide et la zone d'ancrage. Cette branche b présente deux zones extrêmes (au niveau des jonctions avec la zone d'ancrage et la tige rigide) larges dans la direction de la tige et une zone centrale affaiblie (c'est-à-dire mince dans la direction de la tige.) De cette manière, le centre de la branche reliant la tige rigide à la zone d'ancrage constitue un pivot d'axe Op6 autour duquel la tige t est apte à pivoter.

Le gyromètre selon l'invention comprend uniquement quatre modes de vibration dans le plan parmi lesquels figurent les modes utiles d'excitation et de détection en opposition de phase, les deux autres modes étant les modes en phase des éléments 50 et 50' suivant l'axe x et y. En effet, l'utilisation d'un levier implique que le mouvement d'un premier élément mobile dans la direction Oy est toujours en opposition de phase avec celui du deuxième élément mobile. Par conséquent, le dimensionnement du gyromètre selon l'invention est plus facile que celui de l'exemple représenté sur les figures 1a et 1b. Les moyens de liaison caractérisés par des coefficients de raideur, permettent de séparer les modes utiles des modes parasites.

Suivant la première distance $L_{50}$ entre l'axe d'un pivot Op2, Op4, Op6, Op8 et les points de liaison respectifs d'un levier 122, 124, 126, 128 au premier élément mobile 50 (ici la distance entre l'axe du pivot et le premier bras de liaison liant le levier au premier élément mobile) et la deuxième distance $L_{30}$ entre les pivots respectifs Op2, Op4, Op6, Op8 et les points de liaison des leviers respectifs 122, 124, 126, 128 au premier élément mobile (ici entre l'axe des pivots 122, 124, 126, 128 et les bras rigides respectifs 132, 134, 136, 138 liant le levier au deuxième élément mobile 30) dans l'axe de la tige (appelé axe du levier), on peut faire varier l'amplitude du mouvement du deuxième élément mobile 30 par rapport à l'amplitude du mouvement du premier élément mobile 50. Pour que le mode de détection soit équilibré, c'est-à-dire que la résultante des efforts transmis sur le support soit nul il faut que la condition suivante soit respectée :

$$L_{30}/L_{50} = M_{50}/M_{30}$$

$L_{30}$ étant la distance entre les pivots et le deuxième élément mobile dans l'axe du levier. $L_{50}$ étant la distance entre les pivots et le premier élément mobile dans l'axe du levier. $M_{50}$ et $M_{30}$ les masses respectives des éléments mobiles 50 et 30

En choisissant $M_{30} < M_{50}$, l'amplitude selon Oy du mouvement de détection du deuxième élément mobile est donc supérieure à celle du premier élément mobile 30. On peut donc de cette manière augmenter la sensibilité du gyromètre dans le rapport $M_{50}/M_{30}$.

Comme indiqué les figures 1 b et 3b, le cadre intermédiaire externe 50 est excité en vibration selon Ox par une première structure en peigne interdigité 170 qui comporte un demi-peigne fixe 172, attaché à une zone d'ancrage 174 et un demi-peigne mobile 176 constitué le long d'un premier côté (parallèle à Oy) du cadre 50. Les dents ou doigts du demi-peigne fixe 172, en silicium conducteur usiné en même temps que les autres éléments du gyromètre, constituent la première armature d'une capacité et les dents ou doigts du demi-peigne mobile 176, également en silicium conducteur, constituent la deuxième armature de cette capacité. Classiquement, la structure en peigne agit comme excitateur du mouvement de la partie mobile grâce aux forces d'attraction qui s'exercent entre les doigts en regard lorsqu'une tension est appliquée entre les demi-peignes. La tension d'excitation est alternative pour engendrer un mouvement de vibration, et la fréquence de cette tension est choisie très proche de ou égale à la fréquence de résonance mécanique de la structure. La tension d'excitation est appliquée entre la zone d'ancrage 174 et l'une et/ou l'autre des zones d'ancrage 34 et 36 (ou 34g, 34d, 36g, 36d). Le demi-peigne fixe 172 est en contact électrique direct (par le corps du silicium conducteur) avec la zone d'ancrage 174; le demi-peigne mobile 176 est en contact avec les zones d'ancrage 34 et 36 (ou 34g, 34d et 36g, 36d) par l'intermédiaire des moyens de liaison et des corps des cadres 30 et 50, de sorte qu'en appliquant une tension entre la zone d'ancrage 174 et les zones d'ancrage 34 ou 36 (ou 34g, 34d et 36g, 36d) on applique bien une tension entre la partie fixe et la partie mobile du peigne 170.

Le mouvement d'excitation engendré sur le cadre intermédiaire externe 50 est selon la direction Ox, les peignes agissant par modification de la surface en recouvrement mutuel des doigts intercalés. Le microgyromètre comporte de préférence une autre structure à peignes interdigités 80 associée au cadre, symétrique de la structure 170 par rapport à l'axe 38. Elle comporte un demi-peigne fixe 82 attaché à une zone d'ancrage 84, et un demi-peigne mobile 86 usiné le long d'un côté du cadre 50. Cette structure peut servir de détecteur du mouvement du cadre selon Ox. Elle est utile pour l'asservissement du mouvement excité par le peigne 170; l'asservissement est en général utile pour ajuster la fréquence d'excitation par rapport à la fréquence de résonance de la structure ainsi que l'amplitude d'excitation. Les tensions détectées par la structure 80 apparaissent entre la zone d'ancrage 84 et les zones d'ancrage 34 et 36 (ou 34g, 34d et 36g, 36d.)

Au moins un peigne interdigité est associé au cadre de détection 30 pour détecter le mouvement du cadre de détection dans la direction Oy. L'orientation de ces peignes dépend du principe sur lequel repose la détection: si la détection repose sur une mesure des variations de surface en recouvrement mutuel des doigts des demi-peignes fixe et mobile, le peigne de détection des mouvements selon Oy est disposé perpendiculairement au peigne d'excitation 170 (qui repose aussi sur des variations de surface en recouvrement). Mais si la détection repose sur une mesure des variations d'espacement entre les doigts du demi-peigne fixe et du demi-peigne mobile, le peigne de détection est disposé parallèlement au peigne d'excitation. La détection par la variation de l'espacement entre doigts est préférée car elle est plus sensible. L'interdigitation des peignes est alors dissymétrique au repos, les doigts d'un demi-peigne n'étant pas exactement au milieu de l'intervalle entre deux doigts de l'autre demi-peigne, alors qu'un peigne fonctionnant (comme le peigne d'excitation) sur la base de variations de surfaces en recouvrement a les doigts d'un demi-peigne au milieu de l'intervalle entre les doigts de l'autre demi-peigne. C'est le cas sur les figures 1 a et 1 b: les peignes de détection sont disposés avec la même orientation générale que les peignes 170 et 80, bien qu'ils soient associés à un mouvement selon Oy alors que les peignes 170 et 80 sont associés à un mouvement (excitation ou détection) selon Ox. Dans l'exemple de les figures 1a et 1b, le cadre de détection est associé à deux peignes interdigités identiques 90 et 100 disposés le long de l'axe de symétrie 38. Ces peignes jouent tous les deux le même rôle de détecteur du mouvement de la masse selon Oy, et on pourrait en variante se contenter d'un seul peigne placé au centre du cadre ou de deux peignes disposés de part et d'autre de l'axe de symétrie 38 comme cela est représenté sur la figure 3b.

Le peigne 90 comporte un demi-peigne fixe 92 attaché à une zone d'ancrage 94 et un demi-peigne mobile 96 faisant partie de la masse de détection elle-même. La masse de détection comporte une découpe pour laisser la place au peigne fixe 92 et à la zone d'ancrage 94, et les bords de cette découpe sont découpés en forme de doigts pour constituer le demi-peigne mobile 96 dans lequel viennent s'intercaler les doigts du demi-peigne fixe. Dans l'exemple représenté, le peigne 90 est double, c'est-à-dire que deux côtés de la découpe de la masse 30 sont pourvus de doigts, et le demi-peigne fixe 92 comporte des doigts de part et d'autre de la zone d'ancrage 94.

Sur la figure 3b, la structure interdigitée 100 est rigoureusement symétrique de la structure 90 par rapport à l'axe 32 et est formée dans une autre découpe de la masse de détection 30. Elle comporte un demi-peigne fixe 102, une zone d'ancrage 104, et un demi-peigne mobile 106. Sur la figure 3b, la structure interdigitée 100 est rigoureusement symétrique de la structure 90 par rapport à l'axe 38. Pour la détection du mouvement selon Oy, un circuit électronique associé à cette structure détecte la modulation en amplitude des tensions électriques présentes entre la zone d'ancrage 94 et les zones d'ancrage 34 et 36, et/ou entre la zone 104 et les zones 34 et 36 (ou 34g, 34d et 36g, 36d.) Cette modulation n'est due qu'à un déplacement de la masse de détection selon l'axe Oy puisque la masse ne peut se déplacer que selon cet axe.

Les bras des leviers sont libérés (tout l'oxyde est enlevé) de même que les éléments de liaison 116 et 136. La partie 36 est une partie qui reste ancrée (tout l'oxyde n'est pas gravé).

## Revendications

1. Gyromètre à structure vibrante réalisé par micro-usinage dans une plaque mince plane comportant deux ensembles mobiles symétriques (30, 50; 30', 50') couplés par une structure de couplage (20, 20', 22) reliant ces deux ensembles pour permettre un transfert d'énergie mécanique de vibration entre eux, chaque ensemble mobile comportant deux éléments mobiles (30, 50), un premier élément mobile (50) étant relié à la structure de couplage (20, 20', 22) et pouvant vibrer selon deux degrés de liberté dans des directions orthogonales Ox et Oy du plan de la plaque, et un deuxième élément mobile (30) destiné à vibrer selon la direction Oy et relié à des zones d'ancrage fixes (34g,36g;34d;36d) par des moyens de liaison du deuxième élément mobile (30) aux zones d'ancrage n'autorisant pas un mouvement du deuxième élément mobile (30) dans la direction Ox, ledit deuxième élément mobile (30) étant adjacent au premier élément mobile (50) et relié au premier élément mobile (50) par des moyens de liaison, lesdits moyens de liaison permettant la transmission en opposition de phase au deuxième élément mobile (30) du mouvement de vibration du premier élément mobile (50) selon la direction Oy, les moyens de liaison comprenant au moins deux ensembles de liaison (52, 54, 56, 58) du premier élément mobile (50) avec le second élément mobile (30), les ensembles de liaison (52, 54, 56, 58) comprenant au moins un élément de liaison comprenant un bras de flexion étroit et allongé qui présente une grande résistance à l'allongement dans la direction Oy et une faible raideur dans la direction Ox relié à un moyen pour transmettre, en opposition de phase, un mouvement dans la direction Oy du premier élément mobile (50) au deuxième élément mobile (30), **caractérisé en ce que** chaque ensemble de liaison comprend un unique élément de liaison relié d'une part au premier élément mobile (50) et d'autre part au deuxième élément mobile (30), dans lequel le moyen pour transmettre, en opposition de phase, un mouvement dans la direction Oy du premier élément mobile au deuxième élément mobile est un levier (122, 124, 126, 128) relié d'une part au bras de flexion (112, 114, 116, 118) et d'autre part à un des deux éléments mobiles (30, 50), le bras de flexion (112, 114, 116, 118) étant en outre relié à l'élément mobile (50, 30) adjacent à celui auquel est relié le levier (30, 50), le levier (122, 124, 126, 128) étant en liaison pivot avec une zone d'ancrage autour d'un axe du pivot s'étendant dans la direction Oz situé entre le bras de flexion (112, 114, 116, 118) et l'élément mobile auquel est relié le levier.

2. Gyromètre selon la revendication précédente, **caractérisé en ce que** le bras de flexion (112, 114, 116, 118) s'étend dans son ensemble dans la direction Oy.

3. Gyromètre selon la revendication 1, **caractérisé en ce que** le bras de flexion (112, 114, 116, 118) est un bras replié en U comprenant deux branches (112a, 112b; 114a, 114b; 116a 116b; 118a, 118b) reliées entre elles par un élément court rigide (7)

4. Gyromètre selon l'une quelconque des revendications précédentes, **caractérisé en ce que** le levier (122, 124, 126, 128) s'étend sensiblement dans la direction Ox lorsque le premier élément mobile (50) et le deuxième élément mobile (30) sont dans leurs positions respectives de repos autour desquelles ils oscillent respectivement.

5. Gyromètre selon l'une quelconque des revendications précédentes, **caractérisé en ce que** $L_{50}$ étant la première distance entre l'axe du pivot et le point de liaison d'un levier au premier élément mobile dans l'axe du levier, $L_{30}$ étant la deuxième distance entre l'axe du pivot et le point de liaison du levier au deuxième élément mobile dans l'axe du levier; $M_{50}$, $M_{30}$ les masses respectives des premier (50) et deuxième (30) éléments mobiles, la condition suivante est respectée ou quasiment respectée:

$$L_{30}/L_{50} = M_{50}/M_{30}.$$

6. Gyromètre selon l'une quelconque des revendications précédentes, **caractérisé en ce que** l'on a $M_{30}$ < $M_{50}$ de façon à augmenter la sensibilité du gyromètre, $M_{50}$, $M_{30}$ étant les masses respectives des premier (50) et deuxième (30) éléments mobiles.

7. Gyromètre selon l'une quelconque des revendications précédentes, **caractérisé en ce que** chaque ensemble mobile comprend au moins deux bras de flexion de liaison aux zones d'ancrage étroits et allongés (42, 44, 46, 48) reliant le deuxième élément mobile (30) à au moins une zone d'ancrage (34g, 34d, 36g, 36d), les bras de flexion de liaison aux zones d'ancrage présentant une grande résistance à l'allongement dans la direction Ox et une faible raideur dans la direction Oy.

8. Gyromètre selon l'une quelconque des revendications précédentes, **caractérisé en ce que** les moyens de liaison de la masse aux zones d'ancrage comprennent au moins deux bras de flexion de liaison aux zones d'ancrage conçus pour autoriser un déplacement de la masse de détection 30 selon Oy mais pour empêcher tout mouvement significatif de la masse dans la direction Ox.

9. Gyromètre selon l'une quelconque des revendications précédentes, **caractérisé en ce que** le premier élément mobile (50) est un cadre relié à la structure de couplage et entourant le deuxième élément mobile (30) et **en ce que** la structure de couplage comprend un cadre extérieur (20) entourant au moins partiellement le premier élément mobile (50).

## Patentansprüche

1. Gyrometer mit einer vibrierenden Konstruktion, erzeugt durch Mikrobearbeiten in einem dünnen flachen Wafer, umfassend zwei symmetrische bewegliche Baugruppen (30, 50; 30', 50'), die durch eine Kopplungskonstruktion (20, 20', 22) miteinander gekoppelt sind, die diese zwei Baugruppen verbindet, um die Übertragung von mechanischer Vibrationsenergie zwischen ihnen zuzulassen, wobei jede bewegliche Baugruppe zwei bewegliche Elemente (30, 50) umfasst, wobei ein erstes bewegliches Element (50) mit der Kopplungskonstruktion (20, 20', 22) verbunden ist und mit zwei Freiheitsgraden in orthogonalen Richtungen Ox und Oy der Ebene des Wafers vibrieren kann, und wobei ein zweites bewegliches Element (30) zum Vibrieren in der Richtung Oy ausgelegt und mit festen Verankerungszonen (34g, 36g; 34d, 36d) durch Mittel zum Verbinden des zweiten beweglichen Elements (30) mit den Verankerungszonen verbunden ist, die keine Bewegung des zweiten beweglichen Elements (30) in der Richtung Ox zulassen, wobei sich das zweite bewegliche Element (3) neben dem ersten beweglichen Element (50) befindet und mit dem ersten beweglichen Element (50) durch Verbindungsmittel verbunden ist, wobei die Verbindungsmittel das Übertragen, in entgegengesetzter Phase, der Vibrationsbewegung des ersten beweglichen Elements (50) zu dem zweiten beweglichen Element (30) in der Richtung Oy zulässt, wobei die Verbindungsmittel wenigstens zwei Baugruppen (52, 54, 56, 58) zum Verbinden des ersten beweglichen Elements (50) mit dem zweiten beweglichen Element (30) umfassen, wobei die Verbindungsbaugruppen (52, 54, 56, 58) wenigstens ein Verbindungselement umfassen, das einen schmalen und länglichen Biegearm umfasst, der eine hohe Dehnungsbeständigkeit in der Richtung Oy und eine geringe Steifigkeit in der Richtung Ox aufweist, verbunden mit einem Mittel zum Übertragen, in entgegengesetzter Phase, einer Bewegung des ersten beweglichen Elements (50) auf das zweite bewegliche Element (30) in der Richtung Oy, **dadurch gekennzeichnet, dass** jede Verbindungsbaugruppe ein einzelnes Verbindungselement umfasst, das einerseits mit dem ersten beweglichen Element (50) und andererseits mit dem zweiten beweglichen Element (30) verbunden ist, wobei das Mittel zum Übertragen, in entgegengesetzter Phase, einer Bewegung von dem ersten beweglichen Element auf das zweite bewegliche Element in Richtung Oy ein Hebel (122, 124, 126, 128) ist, der einerseits mit dem Biegearm (112, 114, 116, 118) und andererseits mit einem der beiden beweglichen Elemente (30, 50) verbunden ist, wobei der Biegearm (112, 114, 116, 118) auch mit dem beweglichen Element (50, 30) neben dem beweglichen Element (30, 50) verbunden ist, mit dem der Hebel verbunden ist, wobei der Hebel (122, 124, 126, 128) eine Schwenkverbindung mit einer Verankerungszone um eine Schwenkachse bildet, die in der Richtung Oz verläuft und sich zwischen dem Biegearm (112, 114, 116, 118) und dem beweglichen Element befindet, mit dem der Hebel verbunden ist.

2. Gyrometer nach einem vorherigen Anspruch, **dadurch gekennzeichnet, dass** der Biegearm (112, 114, 116, 118) gänzlich in der Richtung Oy verläuft.

3. Gyrometer nach Anspruch 1, **dadurch gekennzeichnet, dass** der Biegearm (112, 114, 116, 118) ein Arm ist, der zu einem U mit zwei Schenkeln (112a, 112b; 114a, 114b; 116a, 116b; 118a, 118b) gefaltet ist, die durch ein kurzes starres Element (7) miteinander verbunden sind.

4. Gyrometer nach einem der vorherigen Ansprüche, **dadurch gekennzeichnet, dass** der Hebel (122, 124, 126, 128) im Wesentlichen in der Richtung Ox verläuft, wenn das erste bewegliche Element (50) und das zweite bewegliche Element (30) in ihrer jeweiligen Ruheposition sind, um die sie jeweils oszillieren.

5. Gyrometer nach einem der vorherigen Ansprüche, **dadurch gekennzeichnet, dass**, wenn $L_{50}$ die erste Distanz zwischen der Schwenkachse und dem Verbindungspunkt eines Hebels mit dem ersten beweglichen Element in der Achse des Hebels ist, $L_{30}$ die zweite Distanz zwischen der Schwenkachse und dem Verbindungspunkt des Hebels mit dem zweiten beweglichen Element in der Achse des Hebels ist; $M_{50}$, $M_{30}$ die jeweiligen Massen des ersten (50) und zweiten (30) beweglichen Elements sind, dann wird die folgende Bedingung erfüllt oder quasi erfüllt:

$$L_{30}/L_{50} = M_{50}/M_{30}.$$

6. Gyrometer nach einem der vorherigen Ansprüche, **dadurch gekennzeichnet, dass** $M_{30} < M_{50}$ ist, um die Empfindlichkeit des Gyrometers zu erhöhen, wobei $M_{50}$, $M_{30}$ die jeweiligen Massen des ersten (50) und zweiten (30) beweglichen Elements sind.

7. Gyrometer nach einem der vorherigen Ansprüche, **dadurch gekennzeichnet, dass** jede bewegliche Baugruppe wenigstens zwei Biegearme zum Verbinden mit den schmalen und länglichen Verankerungszonen (42, 44, 46, 48) umfasst, die das zweite bewegliche Element (30) mit wenigstens einer Verankerungszone (34g, 34d, 36g, 36d) verbinden, wobei die Biegearme zum Verbinden mit den Verankerungszonen eine hohe Dehnungsbeständigkeit in der Richtung Ox und eine geringe Steifigkeit in der Richtung Oy aufweisen.

8.  Gyrometer nach einem der vorherigen Ansprüche, **dadurch gekennzeichnet, dass** die Mittel zum Verbinden der Masse mit den Verankerungszonen wenigstens zwei Biegearme zum Verbinden mit den Verankerungszonen umfassen, die so ausgelegt sind, dass sie eine Verschiebung der Detektionsmasse 30 entlang Oy zulassen, aber jede signifikante Bewegung der Masse in der Richtung Ox verhindern.

9.  Gyrometer nach einem der vorherigen Ansprüche, **dadurch gekennzeichnet, dass** das erste bewegliche Element (50) ein Rahmen ist, der mit der Kopplungskonstruktion verbunden ist und das zweite bewegliche Element (30) umgibt, und dadurch, dass die Kopplungskonstruktion einen äußeren Rahmen (20) umfasst, der das erste bewegliche Element (50) wenigstens teilweise umgibt.

## Claims

1.  A gyrometer with a vibrating structure, produced by micro-machining in a thin flat wafer comprising two symmetrical movable assemblies (30, 50; 30', 50') coupled together by a coupling structure (20, 20', 22) connecting said two assemblies to allow the transfer of mechanical vibration energy between each other, with each movable assembly comprising two movable elements (30, 50), a first movable element (50) being connected to said coupling structure (20, 20', 22) and being capable of vibrating along two degrees of freedom in orthogonal directions Ox and Oy of the plane of the wafer, and a second movable element (30) designed to vibrate along the direction Oy and connected to fixed anchoring zones (34g, 36g; 34d, 36d) by means for connecting said second movable element (30) to said anchoring zones that prevent the movement of said second movable element (30) in the direction Ox, with said second movable element (30) being adjacent to said first movable element (50) and connected to said first movable element (50) by connection means, with said connection means allowing the transmission, in phase opposition, to said second movable element (30) of the vibration movement of said first movable element (50) in the direction Oy, said connection means comprising at least two assemblies (52, 54, 56, 58) for connecting said first movable element (50) to said second movable element (30), with said connection assemblies (52, 54, 56, 58) comprising at least one connection element comprising a narrow and elongate flexure arm that exhibits high resistance to elongation in the direction Oy and low stiffness in the direction Ox and being connected to means for transmitting, in phase opposition, a movement in the direction Oy of said first movable element (50) to said second movable element (30), **characterised in that** each connection assembly comprises a single linking element connected on the one hand to said first movable element (50) and on the other hand to said second movable element (30), wherein the means for transmitting, in phase opposition, a movement in the direction Oy from said first movable element to said second movable element is a lever (122, 124, 126, 128) connected on the one hand to the flexure arm (112, 114, 116, 118) and on the other hand to one of said two movable elements (30, 50), with said flexure arm (112, 114, 116, 118) also being connected to said movable element (50, 30) adjacent to the movable element (30, 50) to which said lever is connected, with said lever (122, 124, 126, 128) forming a pivot link with an anchoring zone around a pivot axis extending in the direction Oz located between the flexure arm (112, 114, 116, 118) and the movable element to which the lever is connected.

2.  The gyrometer according to the preceding claim, **characterised in that** said flexure arm (112, 114, 116, 118) wholly extends in the direction Oy.

3.  The gyrometer according to claim 1, **characterised in that** said flexure arm (112, 114, 116, 118) is an arm folded into a U-shape comprising two branches (112a, 112b; 114a, 114b; 116a, 116b; 118a, 118b) connected together by a short rigid element (7).

4.  The gyrometer according to any one of the preceding claims, **characterised in that** said lever (122, 124, 126, 128) substantially extends in the direction Ox when said first movable element (50) and said second movable element (30) are in their respective rest positions around which they respectively oscillate.

5.  The gyrometer according to any one of the preceding claims, **characterised in that** with $L_{50}$ being the first distance between the pivot axis and the point of connecting a lever to said first movable element in the axis of said lever, $L_{30}$ being the second distance between the pivot axis and the point of connecting said lever to said second movable element in the axis of the lever, $M_{50}$, $M_{30}$ being the respective masses of said first (50) and second (30) movable elements, the following condition is followed or virtually followed:

$$L_{30}/L_{50} = M_{50}/M_{30}.$$

6. The gyrometer according to any one of the preceding claims, **characterised in that** $M_{30} < M_{50}$ so as to increase the sensitivity of the gyrometer, with $M_{50}$, $M_{30}$ being the respective masses of said first (50) and second (30) movable elements.

7. The gyrometer according to any one of the preceding claims, **characterised in that** each movable assembly comprises at least two flexure arms for connecting to said narrow and elongate anchoring zones (42, 44, 46, 48) connecting said second movable element (30) to at least one anchoring zone (34g, 34d, 36g, 36d), with the flexure arms for connecting to the anchoring zones exhibiting high resistance to extension in the direction Ox and low stiffness in the direction Oy.

8. The gyrometer according to any one of the preceding claims, **characterised in that** the means for connecting the mass to the anchoring zones comprise at least two flexure arms for connecting to the anchoring zones designed to authorise the displacement of the detection mass 30 along Oy but to prevent any significant movement of the mass in the direction Ox.

9. The gyrometer according to any one of the preceding claims, **characterised in that** said first movable element (50) is a frame connected to the coupling structure and surrounding said second movable element (30), and **in that** said coupling structure comprises an external frame (20) at least partially surrounding said first movable element (50).

FIG.1a

FIG.1b

FIG.2a

FIG.2b

FIG.2c

FIG.3a

FIG.3b

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2846740

- FR 2859527